Europäisches Patentamt

European Patent Office

Office européen des brevets

(11) Numéro de publication: **0 300 429 B1**

(12) **FASCICULE DE BREVET EUROPEEN**

(45) Date de publication de fascicule du brevet: **26.02.92** (51) Int. Cl.⁵: **A01G 9/10, A01G 31/00**

(21) Numéro de dépôt: **88111608.1**

(22) Date de dépôt: **19.07.88**

(54) **Procédé de culture et de conditionnement de plantes, en particulier de plantes aquatiques.**

(30) Priorité: **23.07.87 FR 8710482**

(43) Date de publication de la demande:
**25.01.89 Bulletin 89/04**

(45) Mention de la délivrance du brevet:
**26.02.92 Bulletin 92/09**

(84) Etats contractants désignés:
**BE CH DE ES GB IT LI NL**

(56) Documents cités:
**EP-A- 0 172 060**
**FR-A- 2 546 371**
**GB-A- 1 165 543**
**GB-A- 2 014 024**

(73) Titulaire: **MAIGRET S.A.**
**73 Route d'Aulnay**
**F-91290 Saint-Germain-les-Arpajon(FR)**

(72) Inventeur: **Maigret, Jean-Jacques**
**73, route d'Aulnay,**
**F-91290 Saint-Germain-les-Arpajon(FR)**

(74) Mandataire: **Casalonga, Axel et al**
**BUREAU D.A. CASALONGA - JOSSE Morassistrasse 8**
**W-8000 München 5(DE)**

Rank Xerox (UK) Business Services

## Description

L'invention concerne la culture, la distribution et la replantation de plantes, notamment de plantes aquatiques.

Habituellement, on trouve dans le commerce les plantes aquatiques, soit sous la forme de plantes avec racines nues, soit sous la forme de boutures sans racine, soit encore sous la forme de plantes enracinées dans une motte de laine de roche contenue dans un pot à dépoter pour replanter. Les plantes à racines nues sont extrêmement fragiles et périssables, tandis que les boutures sans racine sont beaucoup plus difficiles à prendre, et enfin pour les plantes en pots, la manipulation est extrêmement difficile et encombrante.

On connaît, par ailleurs, par le document EP-A-0 172 060 un procédé de culture et de conditionnement de plantes en général qui consiste à utiliser un produit duveteux, élastique, fait de fibres de polypropylène en nappe non tissée ayant l'aspect d'une moquette, à confectionner avec une telle nappe de petits manchons cousus avec les fibres dirigées radialement vers l'intérieur, à reprendre ces manchons pour introduire axialement une ou plusieurs boutures de plantes, puis à placer le tout en milieu humide, notamment en solution hydroponique pour produire l'enracinement.

Pour tenir compte de la variation d'encombrement transversal de la bouture, ou du bouquet de boutures réunies dans un manchon, on utilise en premier l'élasticité des fibres, dans lesquelles on enfonce les tiges grâce à la raideur de celles-ci, et on réalise en outre des manchons de divers calibres.

Un tel procédé de culture est simple et efficace pour des plantes aériennes dont les tiges ont toujours une raideur suffisante pour soutenir le poids de la plante, mais ne conviennent pas pour les plantes aquatiques pour lesquelles les tiges sont toujours beaucoup plus souples, étant destinées à croître immergées. De ce fait, l'introduction axiale dans un manchon du type précédent d'une telle tige ou d'un ensemble de tiges regroupées est extrêmement difficile voire même impossible pour certaines de par la finesse de leur diamètre et risque d'endommager considérablement ces tiges, et de rendre ainsi impossible l'enracinement.

Pour le marcottage direct et pour permettre le repiquage de jeunes plants racinés, sans blesser les racines, il est également proposé dans le document précité EP-A-0 172 060, en variante, de découper une petite bande rectangulaire de nappe de substrat duveteux, de replier ladite bande en forme de manchon autour de la tige du plant, les fibres en saillie du substrat étant tournées vers l'intérieur, les lèvres du manchon étant maintenues réunies. Cependant, suivant cette variante, la bande rectangulaire de substrat duveteux doit être munie, par couture ou collage, sur ses deux grands côtés opposés, de deux élastiques étirés dont la fonction est de replier le ruban sur lui-même lorsqu'on cesse de tirer sur les élastiques. De plus, suivant cette variante, il est proposé que les lèvres du manchon soient maintenues, si nécessaire, par des agrafes, un anneau de plastique fendu ou un dispositif analogue. Cette variante ne convient donc pas à toutes les utilisations.

Le but de l'invention est d'éliminer les inconvénients précédents en mettant en oeuvre un procédé de culture qui convienne en toute sécurité à toutes sortes de tiges, quels que soient leur encombrement et surtout leur raideur et leur finesse.

Le procédé conforme à l'invention de culture et de conditionnement de plantes, en particulier de plantes aquatiques, par bouturage et enracinement d'une ou plusieurs tiges réunies en bouquet dans une motte en forme de manchon faite d'un substrat duveteux et élastique en forme de nappe portant des fibres synthétiques en saillie sur l'une de ses faces suivant lequel on dècoupe une petite bande rectangulaire dans ledit substrat et on replie ladite bande en forme de manchon autour de la tige du bouquet de tiges, les fibres en saillie tournées vers l'intérieur, les deux lèvres du manchon ètant maintenues réunies, ce procédé comprenant les étapes suivantes :

a) on découpe par avance dans un tel substrat des bandes rectangulaires d'une longueur supérieure à la circonférence de la tige ou du bouquet de tiges,

b) on reprend chacune de ces bandes, les fibres en saillie étant tournées vers le haut, et on y dépose transversalement, sur la face portant lesdites fibres en saillie, une extrémité de la tige ou du bouquet de tiges,

c) on replie vers le haut les deux extrémités de la bande autour de la tige ou du bouquet de tiges de manière que lesdites extrémités viennent en contact l'une avec l'autre par leurs faces portant les fibres en saillie, et on saisit au-dessus de la tige ou du bouquet de tiges les deux extrémités superposées de la bande,

d) on introduit l'ensemble ainsi saisi entre les mâchoires d'une pince qui viennent agir entre le point de saisie et la tige ou le bouquet de tiges,

e) on coupe les extrémités de la bande au ras des mâchoires ou juste au-dessus et on élimine ces extrémités coupées,

f) on réalise la fusion des fibres du substrat au niveau de la coupe pour souder les extrémités du manchon sensiblement cylindrique entourent la tige ou le bouquet de tiges,

g) et on retire l'ensemble par ouverture de la pince et immerge dans un milieu de culture l'extrémité de la tige ou du bouquet de tiges entourée par le manchon, en vue de l'enracinement.

Le produit obtenu, c'est-à-dire la motte enracinée, est aisément transportable et commercialisable, et en outre extrêmement facile à replanter.

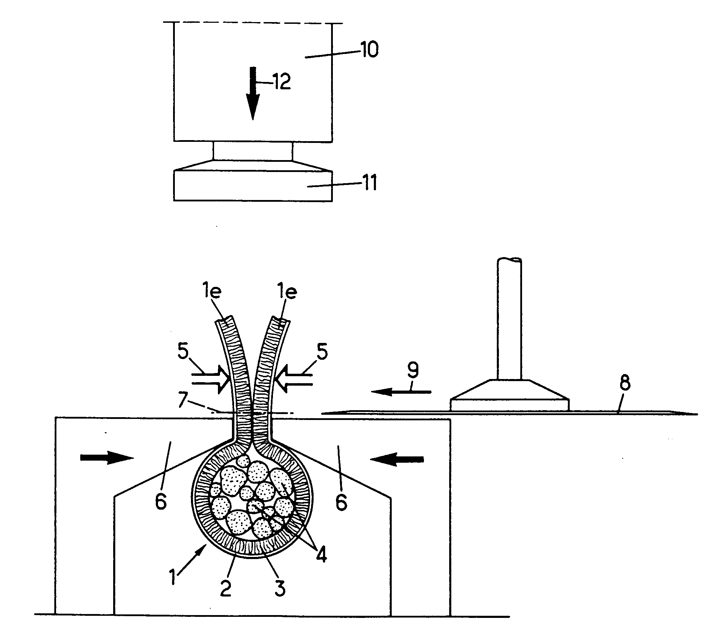

D'autres particularités de l'invention apparaîtront dans la description qui va suivre d'un mode de mise en oeuvre représenté sur le dessin annexé, sur lequel la figure unique schématise l'ensemble du procédé.

La nappe fibreuse utilisée doit être épaisse, duveteuse et élastique pour protéger les racines, être facilement transperçable par celles-ci, être chimiquement inerte et stérilisable, mais en outre être soudable pour la mise en oeuvre du procédé. Pour cet usage, des fibres de polypropylène sont parfaitement adaptées.

On peut en particulier utiliser un substrat fait d'une face de fibres de polypropylène non tissées (aiguilletées) d'où partent sur l'autre face des fibres longues et élastiques à la manière d'une moquette, comme le substrat fabriqué et vendu sous le nom de marque MILCAP par la Société MILCAP FRANCE SA, et déjà utilisé pour confectionner les manchons cousus rappelés plus haut.

Selon l'invention, on découpe par avance de petites bandes rectangulaires dans un tel substrat, et lors de la mise en oeuvre du procédé, on prend chacune de ces bandes et l'on y dépose l'extrémité d'une tige de plante, par exemple de plante aquatique, ou plus généralement plusieurs extrémités de telles tiges réunies en bouquet.

Chaque bande 1 est disposée avec sa face continue 2 à la partie inférieure, et ses fibres 3 dirigées sur le dessus, l'extrémité des tiges 4 à bouturer étant déposée sur le dessus de la bande.

On replie alors les deux extrémités de bande dépassant de part et d'autre du bouquet vers le haut jusqu'à ce qu'elles viennent au contact l'une de l'autre par leur côté fibreux, et l'on saisit l'ensemble, par exemple entre le pouce et l'index, au-dessus du bouquet comme représenté schématiquement par les flèches 5 sur la figure.

L'ensemble ainsi saisi est alors introduit entre les mâchoires 6 d'une pince dont les extrémités viennent resserrer les deux épaisseurs de bande en agissant entre le bouquet de tiges 4 et le point de saisie 5.

On vient alors couper les extrémités de bande situées au-dessus des mâchoires 6 au ras de celles-ci, ou au-dessus d'une ligne 7 située immédiatement au-dessus de ces mâchoires. Ceci peut être obtenu par tout dispositif de coupe approprié tel qu'un disque rotatif 8 du type utilisé en découpage textile et déplacé dans le sens de la flèche 9 comme représenté. On peut naturellement utiliser à la place une lame vibrante ou encore un dispositif de coupe laser.

Après élimination des parties de bande situées au-dessus de la ligne de coupe 7, on produit la fusion des fibres de polypropylène au-dessous de la ligne de coupe 7 pour réaliser la soudure des bords du manchon. Ceci peut être obtenu d'une manière très simple à l'aide d'un simple fer à souder 10 dont la panne plate 11 est déplacée dans le sens représenté par la flèche 12 pour venir simplement au contact de la face coupée 7. On peut naturellement utiliser tout autre mode de soudure telle qu'une soudure à haute fréquence ou une soudure au laser.

Il suffit dès lors d'ouvrir les mâchoires 6 pour recueillir le bouquet de tiges réunies dans son manchon, lequel est ensuite enraciné par immersion en milieu hydroponique ou aquatique.

Le produit obtenu peut être facilement distribué, commercialisé et replanté par l'utilisateur sans aucune difficulté.

Le procédé selon l'invention convient particulièrement bien pour des plantes aquatiques à tiges flexibles, telles que des plantes de bassin ou d'aquarium. En effet, à aucun moment on n'utilise la raideur des tiges. Au contraire, celles-ci sont déposées avec une extrême facilité sur les bandes 1, et ne risquent absolument pas d'être endommagées, ni pendant cette dépose, ni pendant les autres opérations du procédé, grâce à l'excellente protection constituée par la longueur et l'élasticité des fibres 3.

En outre, le pincement en 5, puis par les mâchoires 6, s'adapte automatiquement à l'encombrement du bouquet de tige 4, de sorte que l'on peut avoir un serrage pratiquement constant de ces tiges, quel que soit leur encombrement, et sans avoir à modifier la dimension des bandes puisque l'excédent variable est automatiquement éliminé.

## Revendications

1. Procédé de culture et de conditionnement de plantes, en particulier de plantes aquatiques, par bouturage et enracinement d'une ou plusieurs tiges réunies en bouquet dans une motte en forme de manchon faite d'un substrat duveteux et élastique en forme de nappe portant des fibres synthétiques en saillie sur l'une de ses faces, suivant lequel on découpe une petite bande rectangulaire dans ledit substrat et on replie ladite bande en forme de manchon autour de la tige ou du bouquet de tiges, les fibres en saillie tournées vers l'intérieur, les deux lèvres du manchon étant maintenues réunies, ce procédé comprenant les étapes suivantes:

   a) on découpe par avance dans un tel substrat des bandes rectangulaires (1) d'une longueur supérieure à la circonférence de la tige ou du bouquet de tiges,

b) on reprend chacune de ces bandes, les fibres en saillie étant tournées vers le haut, et on y dépose transversalement, sur la face portant lesdites fibres en saillie, une extrémité de la tige ou du bouquet de tiges,

c) on replie vers le haut les deux extrémités (1e) de la bande autour de la tige ou du bouquet de tiges (4) de manière que lesdites extrémités viennent en contact l'une avec l'autre par leurs faces portant les fibres en saillie, et on saisit (en 5) au-dessus de la tige ou du bouquet de tiges les deux extrémités superposées de la bande,

d) on introduit l'ensemble ainsi saisi entre les mâchoires (6) d'une pince qui viennent agir entre le point de saisie (5) et la tige ou le bouquet de tiges (4),

e) on coupe les extrémités de la bande au ras des mâchoires (6) ou juste au-dessus (en 7) et on élimine ces extrémités coupées,

f) on réalise la fusion des fibres (3) du substrat au niveau de la coupe (7) pour souder les extrémités du manchon sensiblement cylindrique entourant la tige ou le bouquet de tiges,

g) et on retire l'ensemble par ouverture de la pince et immerge dans un milieu de culture l'extrémité de la tige ou du bouquet de tiges entourée par le manchon, en vue de l'enracinement.

2. Procédé selon la revendication 1, caractérisé par le fait qu'on effectue la coupe à l'aide d'un disque tranchant rotatif (8).

3. Procédé selon la revendication 1 ou 2, caractérisé par le fait qu'on effectue la fusion des fibres au niveau de la coupe (7) en amenant la panne plane (11) d'un fer à souder (10) au contact du plan de coupe (7).

## Claims

1. Process for growing and packaging plants, in particular aquatic plants, by propagating cuttings and rooting one or more stems gathered into a bunch in a lump of earth in the form of a sleeve made of a downy and resilient substrate in the form of a sheet bearing synthetic fibres projecting on one of its faces, according to which a small rectangular strip is cut from the said substrate and the said strip is folded back in the shape of a sleeve around the stem or the bunch of stems, the projecting fibres facing inwards, the two lips of the sleeve being held joined together, this process comprising the following stages:

a) rectangular strips (1) of a length longer than the circumference of the stem or of the bunch of stems are cut beforehand from such a substrate,

b) each of these strips is taken, the projecting fibres facing upwards, and an end of the stem or of the bunch of stems is deposited thereon transversely on the face bearing the said projecting fibres.

c) the two ends (1e) of the strip are folded back upwards around the stem or the bunch of stems (4) so that the said ends come into contact with each other via their faces bearing the projecting fibres, and the two superimposed ends of the strip are seized (at 5) above the stem or the bunch of stems,

d) the assembly thus seized is introduced between the jaws (6) of a clamp which come into action between the point of seizure (5) and the stem or the bunch of stems (4),

e) the ends of the strip are cut level with the jaws (6) or just above (at 7) and these cut ends are removed,

f) the fibres (3) of the substrate are melted at the cut (7) in order to weld the ends of the substantially cylindrical sleeve surrounding the stem or the bunch of stems,

g) and the assembly is removed by opening the clamp and the end of the stem or of the bunch of stems surrounded by the sleeve is immersed in a growing medium with a view to rooting.

2. Process according to Claim 1, characterised in that the cutting is performed with the aid of a rotary disc cutter (8).

3. Process according to Claim 1 or 2, characterised in that the melting of the fibres at the cut (7) is carried out by bringing the flat pane (11) of a soldering iron (10) into contact with the cut plane (7).

## Patentansprüche

1. Verfahren zum Züchten und Konditionieren von Pflanzen, insbesondere Wasserpflanzen, durch Stecklingspflanzung und Einwurzelung eines oder mehrerer in einem Bündel zusammengefaßter Stengel in einem hülsenförmigen Ballen aus einem flaumigen und nachgiebigen, vliesartigen Material mit Kunststoffasern, die auf einer seiner Seiten vorstehen, bei dem man einen kleinen, rechteckigen Streifen aus diesem Material herausschneidet und jenen Streifen hülsenförmig um den Stengel oder das Stengelbündel herumfaltet, wobei die vorstehenden Fasern nach innen gewandt sind und die beiden Hülsenränder zusammengehalten werden, wobei dieses Verfahren folgende Schritte umfaßt:

a) man schneidet im voraus aus einem solchen Material rechteckige Streifen (1) aus, deren Länge den Umfang des Stengels oder des Stengelbündels übertrifft,

b) man nimmt jeden dieser Streifen, mit den vorstehenden Fasern nach oben gewandt, und legt ein Ende des Stengels oder des Stengelbündels quer auf die Seite mit jenen vorstehenden Fasern,

c) man faltet die beiden Enden (1e) des Streifens so um den Stengel oder das Stengelbündel (4) und nach oben, daß sich jene Enden mit ihren die vorstehenden Fasern aufweisenden Seiten berühren und man ergreift die beiden überstehenden Enden des Streifens oberhalb des Stengels oder des Stengelbündels (bei 5),

d) man führt die so in Eingriff genommene Anordnung zwischen die Backen (6) einer kleinen Zange, die zwischen dem Punkt (5), an dem man den Streifen ergreift, und dem Stengel oder dem Stengelbündel (4) angreifen,

e) man schneidet die Enden des Streifens unmittelbar an den Backen (6) oder etwas darüber (bei 7) ab und entfernt die abgeschnittenen Enden,

f) man veranlaßt das Schmelzen der Fasern (3) des Materials auf Schnittebene (7), damit die Enden der Hülse im wesentlichen zylindrisch verschmelzen und den Stengel oder das Stengelbündel umgeben

g) und man nimmt die Anordnung aus der Zangenöffnung heraus und taucht das von der Hülse umgebene Ende des Stengels oder des Stengelbündels zur Einwurzelung in ein Nährmedium.

2. Verfahren nach Anspruch 1, dadurch gekennzeichnet, daß das Schneiden mit einer rotierenden Schneidscheibe (8) durchgeführt wird.

3. Verfahren nach Anspruch 1 oder 2, dadurch gekennzeichnet, daß das Schmelzen der Fasern auf Schnittebene (7) dadurch erfolgt, daß die flache Spitze (11) eines Lötkolbens (10) mit der Schnittebene (7) in Berührung gebracht wird.